# EUROPEAN PATENT SPECIFICATION

(11) **EP 3 809 050 B1**
(45) Date of publication and mention of the grant of the patent: **26.06.2024**
(21) Application number: 20201272.0
(22) Date of filing: 12.10.2020
(51) Int. Cl.: F24D 3/18, F24B 13/00, F24D 5/12, F24D 11/02, F24D 19/10, F25B 25/00, F25B 30/02, F25B 30/06

(54) **HYBRID HEATING SYSTEM USING GEOTHERMAL HEAT**
HYBRID-HEIZSYSTEM MIT ERDWÄRME
SYSTÈME DE CHAUFFAGE HYBRIDE UTILISANT LA CHALEUR GÉOTHERMIQUE

(30) Priority: 14.10.2019 FI 20195881
(43) Date of publication of application: 21.04.2021
(73) Proprietor: HögforsGST Oy, 79100 Leppävirta (FI)
(72) Inventor: HARTMAN, Antti, 15560 Nastola (FI)
(74) Representative: Kespat Oy

(56) References cited:
- US-A1- 2010 108 290
- US-A1- 2017 314 822
- US-A1- 2018 336 775

## Description

The object of the invention is a hybrid heating system using geothermal heating, which includes
o a geothermal circuit as a primary heat source
o a heat pump, including a heat collector circuit and a heat emitter circuit which emits heat at a higher temperature
o an intake air device which is connectable in heating/cooling operation to a selected side of the heat pump to operate in a selectable manner for the heating or the cooling of the intake air,
o an exhaust air device with heat recovery, and
   - the geothermal circuit is connected to the collector circuit of the heat pump,
   - the exhaust air circuit is connected to the collector circuit of the heat pump, and
   - the intake air device is connected in a selectable manner to the heat emitter circuit or to the heat collector circuit of the heat pump.

U.S. patent application no. 2018/0336775 discloses a heat pump system using geothermal heating. Several different sources of primary heat are connected to the collector circuit of the heat pump in the disclosed system. Heat sinks, such as an exhaust air device, are connected to the heat emitter circuit of the heat pump as well as indirectly to the collector circuit of the heat pump via a heat exchanger. The heating system further includes a control unit by means of which it is possible to select the heat sources and sinks according to circumstances and heating needs. It is, however, not possible with the disclosed system to achieve a high coefficient of heating performance, while the benefit of the system remains limited with respect to energy consumption on an annual level.

The temperature of the supply water heating the intake air in a cross-flow heat exchanger is typically 70 - 60 °C and it cools to 30 °C when the outside temperature is -25 °C. At the same time, the intake air is heated to 20 °C.

The object of the present invention is to realize a heating and cooling of a building with a reduced amount of primary energy, whereby the power output of the heat pump can be reduced, which leads to greater energy-efficiency. The characteristic features of this invention are indicated in the attached patent claim 1.

The hybrid heating system according to the invention includes a geothermal circuit as a primary heat source, a heat pump, an intake air device which is connectable in heating/cooling operation to the selected side of the heat pump to operate in a selectable manner for the heating or the cooling of the intake air and an exhaust air device with heat recovery. In the present system, the geothermal circuit is connected to the collector circuit of the heat pump, the exhaust air device is connected to the collector circuit of the heat pump, and the intake air circuit is connected in a selectable manner to the heat emitter circuit or the heat collector circuit of the heat pump.

In the heating system according to the invention, the intake air device is connected directly to the collector circuit and indirectly via a heat exchanger to the heat emitter circuit, whereby the heat generated by the primary heat sources can be transferred extremely efficiently to the intake air device.

According to the invention the intake air device and/or the exhaust air device, as opposite heat exchangers, is a multi-layer cross-flow heat exchanger with a high coefficient of performance, in such extent a exhaust flow of fluid of the heat exchanger can be utilized in a opposite heat exchanger or in the geothermal circuit during at least a part of the year so that
- the exhaust flow of the intake air device (10) can be heated directly by the geothermal circuit or by the exhaust air device, or
- the exhaust flow of the exhaust air device (20) can be heated directly by a supply flow of the geothermal circuit or the intake air device.

This means that the return flow of the fluid of the intake air device cools, for example in midwinter, from 20°C to 2°C, whereby it becomes suitable for use directly in the supply flow of the exhaust air device. It is then possible to charge said flow with the heat content collected by the exhaust air device.

In a selected mode, the exhaust flow of the intake air device is adapted to be pre-heated directly by the geothermal circuit and/or by the exhaust air device, whereby an extremely energy-efficient building heating is achieved.

According to the invention the heat pump is layered and comprises two or more units, which are adapted to operate in series together or in smaller groups, whereby it is possible to save energy by using only the heat pumps that are needed in the circumstances.

The heat collector circuit of the heat pump is advantageously configured as a main flow circuit, to which heat-source circuits of the intake and/or exhaust air heat exchanger are connected by a parasite feed flow. Such a configuration permits a large degree of flexibility for the delivery of heat to an exhaust flow from a circuit operating at a low temperature. Specifically, the exhaust flow of the intake air device can be heated either by a geothermal well or by the exhaust air device.

In a selected mode, the exhaust air device can be connectable to the heat emitter circuit in order to emit heat to the exhaust air indirectly via the heat exchanger. This configuration allows the production of a cooling also in cases where there is no actual heat consumption.

The intake-air and/or exhaust-air heat recovery units can be 2-6-layer, advantageously 3-4-layer, cross-flow heat exchangers connected in series and to the counterflow, whereby a manifold increase of the temperature of the medium and a manifold cooling of the exhaust air is achieved.

The geothermal circuit is advantageously a geothermal well. This has proven to be the most cost-efficient alternative.

The heat-pump units connected in cascade are advantageously connected on at least one side (the evaporator side or the condenser side) to their loop circuit by a so-called feed connection, i.e. they are equipped on the evaporator/condenser side with their pump for circulating the medium from a common line. By means of this connection technique, it is possible to use the heat pumps in a flexible manner and to transition to low partial load outputs with a good coefficient of performance. One or more heat pumps are in operation with partial loads depending on the load.

There can be 2 - 6 heat pumps, most advantageously 3 - 5. The significance of the plurality of heat pumps thermodynamically connected in series lies in the fact that each of them operates with a low thermal coefficient. Their coefficient of performance is then exceptional.

The heat exchanger heating the circuit of the intake air device and/or exhaust air device is advantageously connected by a feed connection to the heat emitter circuit of the heat pump. With this connection technique, it is possible to use the intake air device and/or exhaust air device in a flexible manner and to transition to low partial load outputs with a good coefficient of performance.

The heat collector circuit of the heat pumps, the circuit of the intake air device and the circuit of the exhaust air device can be in the same fluid circuit, advantageously a glycol circuit, thus rendering possible temperature levels considerably below zero °C in selected phases.

The heat emitter circuit of the heat pumps can essentially be a circuit of circulating water.

In the system according to the invention, the use a low intake temperature level is possible.

A low intake temperature together with the high coefficient of performance of the fluid/air heat exchanger renders possible a pre-heating of the return flow of the intake air heat exchanger directly by means of secondary, i.e. low-temperature heat sources such as the geothermal well and/or with the aid of the exhaust air heat exchanger.

The impact of the high coefficient of performance of the exhaust air heat exchanger is similar. The low-temperature sources of the system can be utilized efficiently.

The intake air device and/or the exhaust air device is advantageously a multi-layer cross-flow heat exchanger, the gradient of which is reduced by 15 - 30 % per layer when the number of layers is increased, whereby it operates in an energy-efficient manner.

The volumetric flow of the heat pump on the condenser side is advantageously double (generally 1.5-2.5 times) the volumetric flow on the evaporator side. The overall temperature difference on the condenser side is then naturally also approximately double the temperature difference on the evaporator side.

The invention is illustrated in the following in detail with reference to the attached drawings illustrating embodiments of the invention, wherein
- Figure 1: shows an overall configuration of a hybrid heating system according to the invention,
- Figure 2: shows a mode that is implementable in the hybrid heating system according to the invention, in which a cooling of a building is realized by means of heat pumps in late summer,
- Figure 3: shows a mode that is implementable in the hybrid heating system according to the invention, in which a cooling of a building is realized from a geothermal well in early summer,
- Figure 4: shows a mode that is implementable in the hybrid heating system according to the invention, in which heat is recovered from the exhaust air and the intake air is heated by means of a heat pump at the beginning of the heating season,
- Figure 5: shows a mode that is implementable in the hybrid heating system according to the invention, in which the intake air is heated with the exhaust-air heat and with geothermal heat in midwinter,
- Figure 6: shows a part of a mode that is implementable in the hybrid heating system according to the invention, in which the intake air is pre-heated by means of the exhaust-air heat recovery.

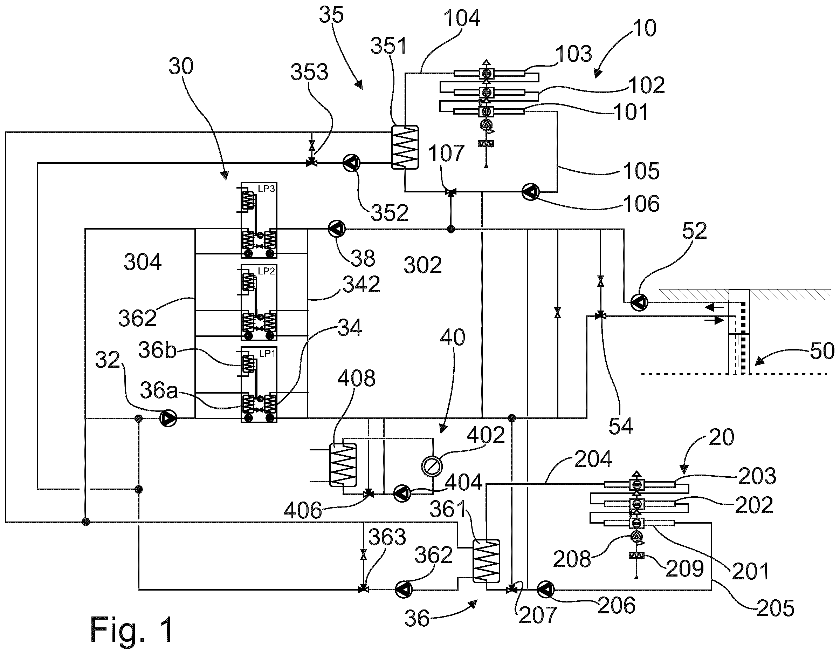

Figure 1 shows an overall configuration of a hybrid heating system according to the invention. A heat pump circuit 30, a part known in and of itself, comprises a compressor, an expansion valve, an evaporator 34 and a condenser 36a which are connected so as to utilize a selected external heat source by means of the evaporator and emit heat by means of its evaporator 34. By means of the condenser 36b, it is possible to utilize a heat quantity of a superheated medium, yet this is not essential from the standpoint of the present invention. The heat pump here is an aggregate formed by three heat pumps (LP1, LP2, LP3) thermodynamically connected in series and comprising a heat collector circuit 302 and a heat emitter circuit 304 which emits heat at a high temperature. The condenser 36a of each heat pump LP1, LP2 and LP3 is connected to the heat emitter circuit by the feed connection 362 and the evaporator 34 of each heat pump LP1, LP2 and LP3 is connected to the heat collector circuit by the feed connection 342. The heat emitter circuit 304 has its own pump 32 and the collector circuit 302 has its own pump 38. In the system, it is also possible to utilize modes in which the heat pump is not in operation.

The geothermal well 50 acting as the heat source here is connected to the collector circuit of the heat pump. The use of the geothermal heat is controlled by means of the pump 52 and the flow is regulated by a three-way regulating valve 54.

The heat pump circuit utilizes the exhaust air by means of an aggregate 20 here. The exhaust-air heat-recovery unit, which has both a heating and a cooling function, is composed of three layers here comprising heat exchangers 201, 202 and 203 connected in series and to the counterflow, a fan 208 and an air filter 209. The incoming medium entering the heat-exchangers 201, 202 and 203 is connected to the heat exchanger 361 by the duct 204 while the exiting medium is connected to the same via the duct 205. The circulation of the medium in the exhaust-air heat-recovery unit is controlled by means of a pump 206 and a three-way regulating valve 207. The exhaust-air heat recovery can be connected in a selectable manner to the collector circuit of the heat pump or indirectly to the heat emitter circuit via the heat exchanger unit 36. Figure 1 depicts one exhaust air device for the sake of simplicity, but there can also be a plurality of devices. For example, the access of each floor of an apartment building has an exhaust-air heat exchanger, which are connected in parallel. This way, it is possible to utilize all of the separately existing outlets.

The intake air device 10 here is also composed of three layers comprising heat exchangers 101, 102 and 103 connected in series and to the counterflow. The incoming medium entering the heat-exchangers 101, 102 and 103 is connected to the heat exchanger 351 by the duct 104 while the exiting medium is connected to the same via the duct 105. The circulation of the medium is controlled by means of a pump 106 and a three-way regulating valve 107. The intake air device is connectable to a selected side of the heat pump to operate in a selectable manner for the heating or the cooling of the intake air. The intake air device is connected directly to the collector circuit by a feed connection and indirectly to the heat emitter circuit by the heat exchanger. There can be one intake air device or a plurality of intake air devices connected in parallel.

It is also possible to connect to the heat emitter circuit of the heat pump, for example, radiators or door air-curtain fans, which are omitted in the figures as they are not essential from the standpoint the present invention. The figures show a convector 40 comprising a heat emitter 402, a convector-circuit pump 404, a three-way regulating valve 406 and a heat exchanger 408 by means of which it is possible to deliver additional heat to the convector 40 from the heat emitter circuit 304 if necessary.

The system further includes a control unit by means of which a selected connection configuration (for example, the heating-season modes: early summer, late summer, beginning of heating season, midwinter) can be implemented according to circumstances and heating/cooling needs. The system operates with a very small number of valves and most modes can be selected by activating/shutting off pumps.

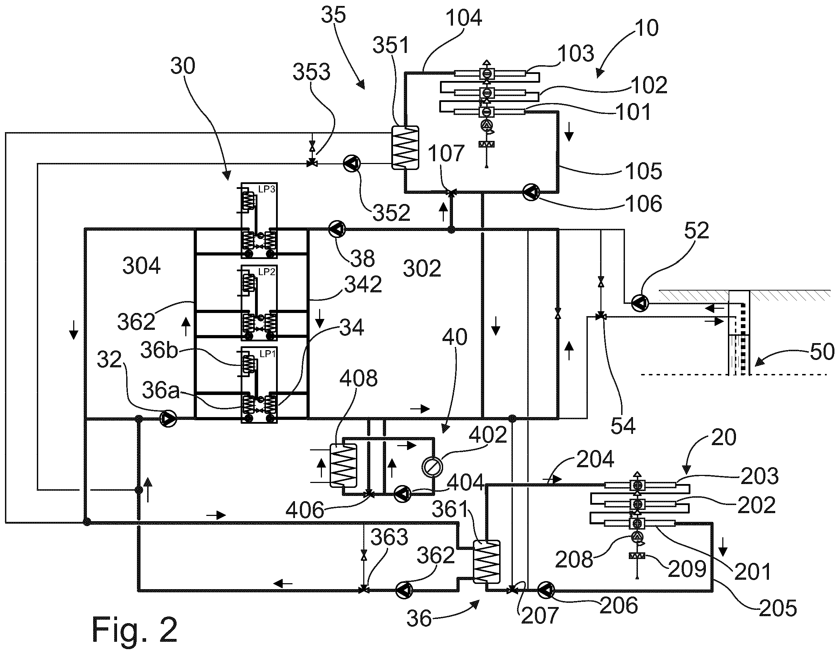

Figure 2 shows a connection configuration which can be advantageously used for cooling a building in late summer. In this scenario, it is advantageous to realize the cooling of the building by means of the heat pumps, as the geothermal well has warmed up by now. The intake air device 10 and the convector circuit 40 are connected by a feed connection to the collector circuit of the heat pump 30 in order to collect heat from the air inside the building so that the pumps 106 and 404 are on. The exhaust air device 20 is connected indirectly via the heat exchanger unit 36 to the heat emitter circuit of the heat pump in order to emit heat to the exhaust air. In this scenario, the pumps 206 and 362 are on and the flow of the medium is regulated by a three-way regulating valve 363.

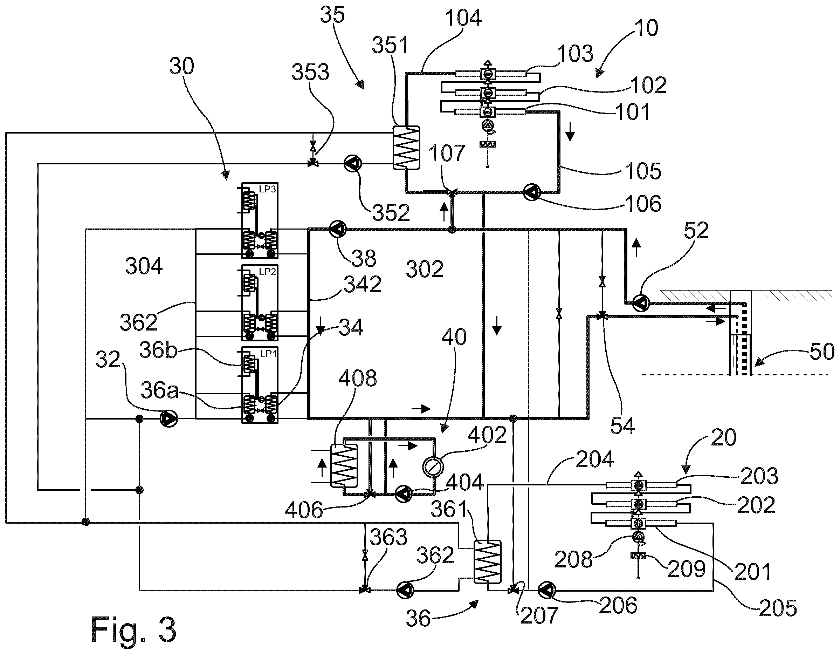

Figure 3 shows a connection configuration in which a cool geothermal well 50 is used for cooling a building in early summertime. In this connection configuration, all heat pumps are off and heat is transferred directly from the air indoors to the geothermal well 50 via the collector circuit. The intake air device 10 and the convectors 40 are connected via a feed connection to the collector circuit of the heat pump 30 when the pumps 106 and 404 are on. Medium is pumped into the geothermal well 50 by the pump 52 and the flow is regulated by a three-way regulating valve 54.

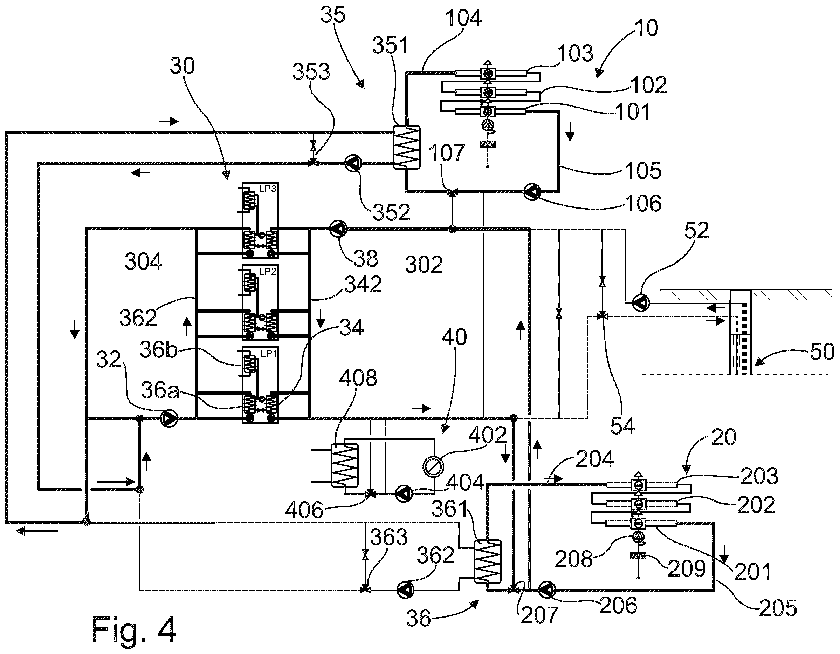

Figure 4 shows a connection configuration that is used for the heating of a building in fall at the beginning of the heating season when the outside air temperature is 0-15 °C. In this scenario, the recovery of heat from the exhaust air is utilized as a heat source and the intake air is heated by the heat pump 30. The heat stored in the geothermal well 50 in summer is still saved at this stage for midwinter when the need for heating is greatest. In this connection configuration, the intake air device 10 is connected indirectly to the heat emitter circuit of the heat pump 30 via the heat exchanger unit 35 and the exhaust air device 20 is connected directly to the heat collector circuit of the heat pump 30 by a feed connection. The pumps 106 and 352 of the intake air device are on and the flow of the medium is regulated by a three-way regulating valve 353.

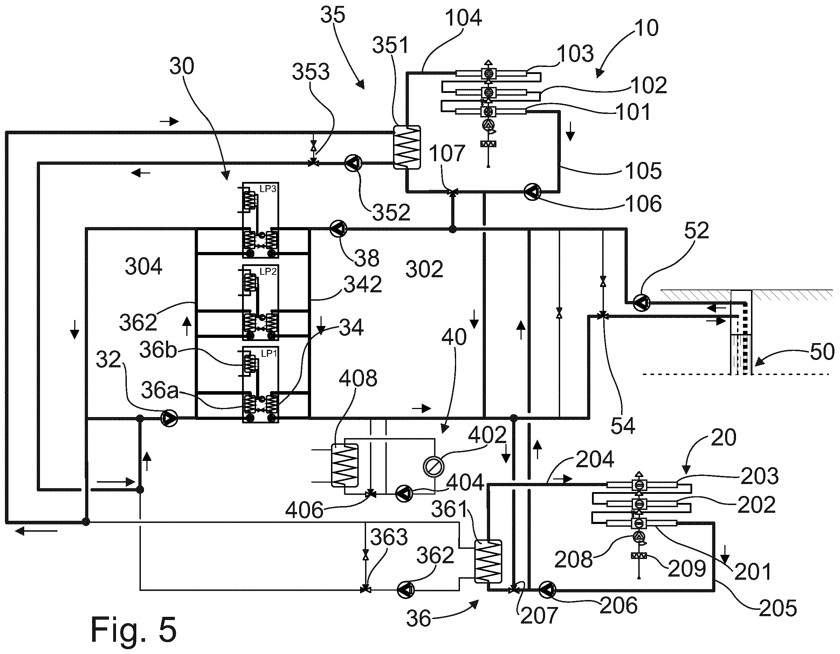

Figure 5 shows a connection configuration that can be used in the heating system in midwinter when the need for heating energy is greatest. In the connection configuration according to Figure 5, the geothermal well 50 is connected as a heat source to the collector circuit of the heat pump 30. The intake and exhaust air devices are connected to the collector circuit by a feed connection in such a manner that the intake air is heated and the exhaust air is cooled. Moreover, heat is delivered to the intake air device 10 indirectly from the heat emitter circuit of the heat pump 30 via the heat exchanger unit 35.

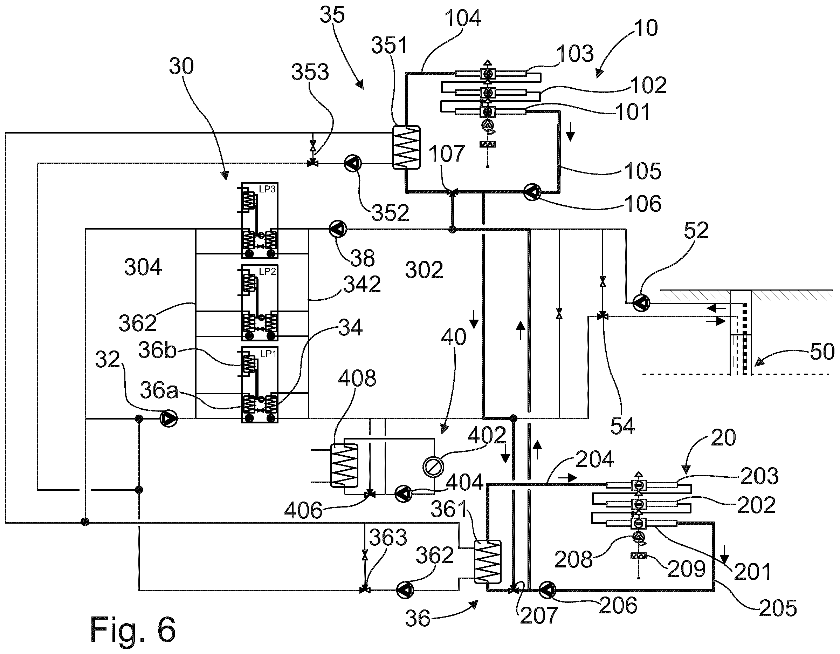

Figure 6 shows a preheating of the intake air by means of the recovery of heat from the exhaust air that is separate from the connection configuration that can be used in midwinter. The heat-recovery units of the intake and exhaust air devices are connected to one another directly via the same medium circuit.

The temperature of the supply water (glycol) of the multi-layer intake-air cross-flow heat exchanger can be as low as 30 °C and it cools to -8 °C when the outside temperature is - 25 °C. At the same time, the intake air is heated to 20 °C. The gradient describing the coefficient of performance of the heat exchanger is thus max (|30 °C - 20 °c| = 10 °C; |(-25 °C) - (-8°C)| = 17 °C), i.e. 17 °C.

The gradient of the intake air device 10 and/or the exhaust air device 20 when the intake air is -25 °C and the supply water is 30 °C is accordingly in the range of 10 - 30 °C, advantageously 15 - 12 °C.

The intake air device 10 is thus adapted to operate at a low temperature, 25 - 45 °C, advantageously 28 - 37 °C, of the supply water.

The gradient of the multi-layer cross-flow heat exchanger functioning as the intake air device 10 and/or exhaust air device 20 can be reduced by 15 - 30 % per layer when the number of layers is increased. For example, in a one-layer exhaust air device 20, if the temperature of the supply water (glycol) is 0 °C, it is heated to 5 °C. If the temperature of the exhaust air is 22 °C, the gradient of the one-layer exhaust air device 20 is 17 °C. When a second layer is added to the exhaust air device 20, the supply water is heated to 9 °C, whereby the gradient is reduced to 13 °C, i.e. the gradient is reduced by 23 %. When a third layer is added to the exhaust air device 20, the supply water is heated to 12 °C whereby the gradient is reduced to 10 °C, i.e. the gradient is reduced by 23 % from the preceding value. The gradient is accordingly always reduced by 23 % from the preceding value when the number of layers is increased, i.e. the gradient becomes 8 °C, 6 °C and 4.5 °C when there are 4, 5 and 6 layers, respectively.

The gradient of the heat exchanger can be considered a characteristic that describes its coefficient of performance. Defining an absolute coefficient of performance based on mass flow and circumstances is challenging nor does it fully describe the efficiency of a heat exchanger. When layers are added to the heat exchanger, thus reducing its gradient, it is possible to reduce the mass flow. Pumping can accordingly be decreased, thus improving the energy efficiency of the overall system. The intake air device 10 and the exhaust air device 20 that can be used in the hybrid heating system according to the invention can nevertheless be described as a heat exchanger with a high coefficient of performance of 35 - 95 %, advantageously 50 - 70
%.

## Claims

1. A hybrid heating system, which includes
o a geothermal circuit (50, 52, 54) as a primary heat source
o a heat pump (30), including a heat collector circuit (302) and a heat emitter circuit (304) which emits heat at a high temperature
o an intake air device (10) which is connectable in heating/cooling operation to a selected side of the heat pump to operate in a selectable manner for the heating or the cooling of the intake air,
o an exhaust air device (20) with heat recovery, and
an exhaust air device (20) and the geothermal circuit (50, 52, 54) are connected to the collector circuit of the heat pump (302), and the intake air device (10) is connected in a selectable manner to the heat emitter circuit (304) or to the heat collector circuit (302) of the heat pump
**characterized in that**
o the intake air device (10) is connected directly to the collector circuit (302) and indirectly to the heat emitter circuit (304) via a heat exchanger (351),
o the intake air device (10) and/or the exhaust air device (20) as opposite heat exchangers, is a multi-layer cross-flow heat exchanger with a high coefficient of performance, in such extent an exhaust flow of fluid of the heat exchanger can be utilized in a opposite heat exchanger or in the geothermal circuit during at least a part of the year, so that
o the exhaust flow of the intake air device (10) can be heated directly by the geothermal circuit (50, 52, 54) or by the exhaust air device (20), or
o the exhaust flow of the exhaust air device (20) can be heated directly by a supply flow of the geothermal circuit (50, 52, 54) or the intake air device (10), and
o the heat pump (30) is layered and comprises two or more units that are adapted to operate in series together or in small groups.

2. The hybrid heating system according to claim 1, **characterized in that** the heat collector circuit (302) of the heat pump (30) is configured as a main flow circuit to which heat-source circuits of the intake and/or exhaust air heat exchanger are connected by a feed flow.

3. The hybrid heating system according to claim 1 or 2, **characterized in that**, in a selected mode, the exhaust air device is connectable to the heat emitter circuit in order to emit heat to the exhaust air indirectly via the heat exchanger.

4. The hybrid heating system according to any of claims 1 - 3, **characterized in that** the intake-air (10) and/or exhaust-air heat-recovery units (20) are 2-6-layer, advantageously 3-4-layer, cross-flow heat exchangers connected in series and to the counterflow.

5. The hybrid heating system according to any of claims 1 - 4, **characterized in that** the geothermal circuit (50, 52, 54) is a geothermal well (50).

6. The hybrid heating system according to any of claims 1 - 5, **characterized in that** the heat-pump units connected in cascade are connected on at least one side, namely the evaporator side or the condenser side, to their loop circuit by a so-called feed connection, i.e., they are equipped on the evaporator/condenser side with their pump for circulating the medium from a common line.

7. The hybrid heating system according to any of claims 1 - 6, **characterized in that** there are 2 - 6, advantageously 3 - 5, heat pumps.

8. The hybrid heating system according to any of claims 1 - 7, **characterized in that** the heat exchanger (351, 361) heating the circuits of the intake air device (10) and/or the exhaust air device (20) is connected by a feed connection to the heat emitter circuit (304) of the heat pump.

9. The hybrid heating system according to any of claims 1 - 8, **characterized in that** the heat collector circuit (302) of the heat pumps (30), the circuit of the intake air device (10) and the circuit of the exhaust air device (20) are in the same fluid circuit having a first fluid flowing in the circuit, where the first fluid is advantageously glycol, thus rendering possible temperature levels considerably below zero °C in selected phases.

10. The hybrid heating system according to any of claims 1 - 9, **characterized in that** the heat emitter circuit (304) of the heat pumps (30) has a second fluid flowing in the circuit, which second fluid is water.

11. The hybrid heating system according to any of claims 1 - 9, **characterized in that** the gradient of the intake air device (10) and/or the exhaust air device (20) when the intake air is -25 °C and the supply water is 30 °C is 10 - 30 °C, advantageously 15 - 25 °C.

12. The hybrid heating system according to any of claims 1 - 11, **characterized in that** the system further includes a control unit using pumps and/or valves, by means of which a selected connection configuration can be implemented according to circumstances and heating/cooling needs.

13. The hybrid heating system according to any of claims 1 - 12, **characterized in that** the intake air device (10) and/or the exhaust air device (20) is a multi-layer cross-flow heat exchanger, the gradient of which is reduced by 15 - 30 % per layer when the number of layers is increased.

14. The hybrid heating system according to any of claims 1 - 13, **characterized in that** the volumetric flow of the heat pump (30) on the condenser side is double, generally 1.5-2.5 times, the volumetric flow on the evaporator side.

15. The hybrid heating system according to any of claims 1 - 14, **characterized in that** the volumetric flow of the heat pump (30) on the condenser side is double, generally 1.5-2.5 times, the volumetric flow on the evaporator side.

## Patentansprüche

1. Hybrid-Heizsystem, das Folgendes einschließt
o eine Erdschaltung (50, 52, 54) als primäre Wärmequelle
o eine Wärmepumpe (30), die eine Wärmekollektorschaltung (302) und eine Wärmesenderschaltung (304) einschließt, die Wärme mit einer hohen Temperatur ausstrahlt
o eine Ansaugluftvorrichtung (10), die im Heiz-/Kühlbetrieb mit einer ausgewählten Seite der Wärmepumpe verbunden werden kann, um wahlweise zum Heizen oder Kühlen der Ansaugluft betrieben zu werden,
o eine Abluftvorrichtung (20) mit Wärmerückgewinnung, und
eine Abluftvorrichtung (20) und die Erdschaltung (50, 52, 54) mit der Kollektorschaltung der Wärmepumpe (302) verbunden sind, und die Ansaugluftvorrichtung (10) wahlweise mit der Wärmesenderschaltung (304) oder mit der Wärmekollektorschaltung (302) der Wärmepumpe verbunden ist
**dadurch gekennzeichnet, dass**
o die Ansaugluftvorrichtung (10) direkt mit der Kollektorschaltung (302) und indirekt über einen Wärmetauscher (351) mit der Wärmesenderschaltung (304) verbunden ist,
o die Ansaugluftvorrichtung (10) und/oder die Abluftvorrichtung (20) als gegenüberliegende Wärmetauscher ein mehrschichtiger Kreuzstromwärmetauscher mit einem hohen Leistungskoeffizienten ist, in dem Maße, dass ein Fluidstrom der mindestens einen Teil des Jahres in einem gegenüberliegenden Wärmetauscher oder in der Erdschaltung genutzt werden kann, sodass
oder Abluftstrom der Ansaugluftvorrichtung (10) direkt durch die Erdschaltung (50, 52, 54) oder durch die Abluftvorrichtung (20) erwärmt werden kann, oder
oder Abluftstrom der Abluftvorrichtung (20) direkt von einem Versorgungsstrom der Erdschaltung (50, 52, 54) oder der Ansaugluftvorrichtung (10) erwärmt werden kann, und
o die Wärmepumpe (30) in Schichten aufgebaut ist und zwei oder mehr Einheiten umfasst, die so eingerichtet sind, dass sie in Serie oder in kleinen Gruppen betrieben werden können.

2. Hybrid-Heizsystem nach Anspruch 1, **dadurch gekennzeichnet, dass** die Wärmekollektorschaltung (302) der Wärmepumpe (30) als Hauptstromschaltung konfiguriert ist, an die die Wärmequellenschaltungen des Ansaug- und/oder Abluftwärmetauschers durch einen Zuführungsstrom verbunden sind.

3. Hybrid-Heizsystem nach Anspruch 1 oder 2, **dadurch gekennzeichnet, dass** in einem ausgewählten Modus die Abluftvorrichtung mit der Wärmesenderschaltung verbunden werden kann, um indirekt über den Wärmetauscher Wärme an die Abluft auszustrahlen.

4. Hybrid-Heizsystem nach einem der Ansprüche 1-3, **dadurch gekennzeichnet, dass** die Ansaugluft- (10) und/oder Abluft-Wärmerückgewinnungseinheiten (20) 2-6-schichtige, vorteilhafterweise 3-4-schichtige, Kreuzstromwärmetauscher sind, die in Reihe und mit dem Gegenstrom verbunden sind.

5. Hybrid-Heizsystem nach einem der Ansprüche 1-4, **dadurch gekennzeichnet, dass** die Erdschaltung (50, 52, 54) ein Erdbrunnen (50) ist.

6. Hybrid-Heizsystem nach einem der Ansprüche 1-5, **dadurch gekennzeichnet, dass** die in Kaskade verbundenen Wärmepumpeneinheiten mindestens auf einer Seite, nämlich der Verdampferseite oder der Verflüssigerseite, über eine sogenannte Zuführungsverbindung mit ihrer Schleifenschaltung verbunden sind, d. h. sie sind auf der Verdampfer-/Verflüssigerseite mit ihrer Pumpe zum Zirkulieren des Mediums aus einer gemeinsamen Leitung ausgestattet.

7. Hybrid-Heizsystem nach einem der Ansprüche 1-6, **dadurch gekennzeichnet, dass** 2 bis 6, vorteilhafterweise 3 bis 5, Wärmepumpen vorhanden sind.

8. Hybrid-Heizsystem nach einem der Ansprüche 1-7, **dadurch gekennzeichnet, dass** der Wärmetauscher (351, 361), der die Schaltungen der Ansaugluftvorrichtung (10) und/oder der Abluftvorrichtung (20) beheizt, über eine Zuführungsverbindung mit der Wärmesenderschaltung (304) der Wärmepumpe verbunden ist.

9. Hybrid-Heizsystem nach einem der Ansprüche 1-8, **dadurch gekennzeichnet, dass** die Wärmekollektorschaltung (302) der Wärmepumpen (30), die Schaltung der Ansaugluftvorrichtung (10) und die Schaltung der Abluftvorrichtung (20) in derselben Fluidschaltung liegen, in der ein erstes Fluid strömt, wobei es sich bei dem ersten Fluid vorteilhafterweise um Glykol handelt, sodass in ausgewählten Phasen Temperaturstufen deutlich unter Null °C möglich sind.

10. Hybrid-Heizsystem nach einem der Ansprüche 1-9, **dadurch gekennzeichnet, dass** die Wärmesenderschaltung (304) der Wärmepumpen (30) ein zweites Fluid in der Schaltung aufweist, wobei das zweite Fluid Wasser ist.

11. Hybrid-Heizsystem nach einem der Ansprüche 1-9, **dadurch gekennzeichnet, dass** der Gradient der Ansaugluftvorrichtung (10) und/oder der Abluftvorrichtung (20) bei einer Ansauglufttemperatur von -25 °C und einer Wassertemperatur von 30 °C 10-30 °C, vorteilhafterweise 15-25 °C, beträgt.

12. Hybrid-Heizsystem nach einem der Ansprüche 1-11, **dadurch gekennzeichnet, dass** das System ferner eine Steuereinheit einschließt, die Pumpen und/oder Ventile verwendet, mittels derer eine ausgewählte Verbindungskonfiguration nach Maßgabe der Umstände und des Heiz-/Kühlbedarfs implementiert werden kann.

13. Hybrid-Heizsystem nach einem der Ansprüche 1-12, **dadurch gekennzeichnet, dass** die Ansaugluftvorrichtung (10) und/oder die Abluftvorrichtung (20) ein mehrschichtiger Kreuzstromwärmetauscher ist, dessen Gradient bei Erhöhung der Anzahl der Schichten um 15-30 % pro Schicht reduziert wird.

14. Hybrid-Heizsystem nach einem der Ansprüche 1-13, **dadurch gekennzeichnet, dass** der Volumenstrom der Wärmepumpe (30) auf der Verflüssigerseite das Doppelte, im Allgemeinen das 1,5-2,5fache, des Volumenstroms auf der Verdampferseite beträgt.

15. Hybrid-Heizsystem nach einem der Ansprüche 1-14, **dadurch gekennzeichnet, dass** der Volumenstrom der Wärmepumpe (30) auf der Verflüssigerseite das Doppelte, im Allgemeinen das 1,5-2,5fache, des Volumenstroms auf der Verdampferseite beträgt.

## Revendications

1. Système de chauffage hybride, qui comprend
o un circuit géothermique (50, 52, 54) comme source de chaleur principale,
o une pompe à chaleur (30), y compris un circuit pour le collecteur de chaleur (302) et un circuit pour l'émetteur de chaleur (304) qui émet de la chaleur à une température élevée,
o un dispositif d'admission d'air (10) qui peut être raccordé lors des opérations de chauffage/refroidissement à un côté particulier de la pompe à chaleur afin d'être utilisé de manière sélectionnable pour chauffer ou refroidir l'air aspiré,
o un dispositif d'évacuation d'air (20) avec récupération de chaleur, et
un dispositif d'évacuation d'air (20) et le circuit géothermique (50, 52, 54) sont raccordés au circuit du collecteur de la pompe à chaleur (302), et le dispositif d'admission d'air (10) est raccordé de manière sélectionnable au circuit de l'émetteur de chaleur (304) ou au circuit du collecteur de chaleur (302) de la pompe à chaleur,
**caractérisé en ce que**
o le dispositif d'admission d'air (10) est raccordé directement au circuit du collecteur (302) et indirectement au circuit de l'émetteur de chaleur (304) par le biais d'un échangeur de chaleur (351),
o le dispositif d'admission d'air (10) et/ou le dispositif d'évacuation d'air (20) en tant qu'échangeurs de chaleur opposés, constituent un échangeur de chaleur multicouche à flux croisés avec un coefficient de performance élevé, dans la mesure où un flux d'évacuation du fluide de l'échangeur de chaleur peut être utilisé dans un échangeur de chaleur opposé ou dans le circuit géothermique pendant au moins une partie de l'année, de sorte que
o le flux d'évacuation du dispositif d'admission d'air (10) puisse être directement chauffé par le circuit géothermique (50, 52, 54) ou par le dispositif d'évacuation d'air (20), ou
o le flux d'évacuation du dispositif d'évacuation d'air (20) puisse être directement chauffé par un flux d'alimentation du circuit géothermique (50, 52, 54) ou du dispositif d'admission d'air (10), et
o la pompe à chaleur (30) dispose de couches et se compose de deux unités au moins capables de fonctionner en série ensemble ou en petits groupes.

2. Système de chauffage hybride conformément à la revendication 1, **caractérisé en ce que** le circuit du collecteur de chaleur (302) de la pompe à chaleur (30) est configuré comme un circuit de flux principal auquel sont raccordés les circuits de source de chaleur de l'échangeur de chaleur avec admission et/ou évacuation d'air par un flux d'alimentation.

3. Système de chauffage hybride conformément à la revendication 1 ou 2, **caractérisé en ce que**, dans un mode sélectionné, le dispositif d'évacuation d'air peut être raccordé au circuit de l'émetteur de chaleur afin d'émettre indirectement de la chaleur dans l'air évacué par le biais de l'échangeur de chaleur.

4. Système de chauffage hybride conformément à l'une quelconque des revendications 1 à 3, **caractérisé en ce que** les unités de récupération de chaleur pour l'air évacué (20) et/ou l'air aspiré (10) sont des échangeurs de chaleur à flux croisés avec 2 à 6 couches, avantageusement 3 à 4 couches, raccordés en série et au contre-courant.

5. Système de chaleur hybride conformément à l'une quelconque des revendications 1 à 4, **caractérisé en ce que** le circuit géothermique (50, 52, 54) est un puits géothermique (50).

6. Système de chaleur hybride conformément à l'une quelconque des revendications 1 à 5, **caractérisé en ce que** les unités de la pompe à chaleur raccordées en cascade sont reliées au moins d'un côté, à savoir celui de l'évaporateur ou du condensateur, à leur circuit en boucle par une connexion dite d'alimentation, c'est-à-dire qu'elles disposent de leur pompe du côté de l'évaporateur/du condensateur afin de faire circuler le fluide à partir d'une conduite commune.

7. Système de chauffage hybride conformément à l'une quelconque des revendications 1 à 6, **caractérisé en ce que** 2 à 6 pompes à chaleur, avantageusement 3 à 5, sont disponibles.

8. Système de chauffage hybride conformément à l'une quelconque des revendications 1 à 7, **caractérisé en ce que** l'échangeur de chaleur (351, 361) chauffant les circuits du dispositif d'admission d'air (10) et/ou du dispositif d'évacuation d'air (20) est raccordé par une connexion d'alimentation au circuit de l'émetteur de chaleur (304) de la pompe à chaleur.

9. Système de chauffage hybride conformément à l'une quelconque des revendications 1 à 8, **caractérisé en ce que** le circuit du collecteur de chaleur (302) des pompes à chaleur (30), le circuit du dispositif d'admission d'air (10) et le circuit du dispositif d'évacuation d'air (20) se trouvent dans le même circuit de fluide dans lequel s'écoule un premier fluide, avantageusement du glycol, permettant ainsi d'obtenir des niveaux de température nettement inférieurs à zéro °C dans les phases sélectionnées.

10. Système de chauffage hybride conformément à l'une quelconque des revendications 1 à 9, **caractérisé en ce qu'**un second fluide, à savoir de l'eau, s'écoule dans le circuit de l'émetteur de chaleur (304) des pompes à chaleur (30).

11. Système de chauffage hybride conformément à l'une quelconque des revendications 1 à 9, **caractérisé en ce que** le gradient du dispositif d'admission d'air (10) et/ou du dispositif d'évacuation d'air (20) est compris entre 10 et 30 °C, avantageusement entre 15 et 25 °C, lorsque l'air aspiré est à -25 °C et que l'eau d'alimentation est à 30 °C.

12. Système de chauffage hybride conformément à l'une quelconque des revendications 1 à 11, **caractérisé en ce que** le système comprend aussi une unité de contrôle qui utilise les pompes et/ou les soupapes, au moyen de laquelle il est possible de mettre en place une configuration de connexion particulière en fonction des circonstances et des besoins de chauffage/refroidissement.

13. Système de chauffage hybride conformément à l'une quelconque des revendications 1 à 12, **caractérisé en ce que** le dispositif d'admission d'air (10) et/ou le dispositif d'évacuation d'air (20) sont un échangeur de chaleur multicouche à flux croisés, dont le gradient est réduit de 15 à 30 % par couche en cas d'augmentation du nombre de couches.

14. Système de chauffage hybride conformément à l'une quelconque des revendications 1 à 13, **caractérisé en ce que** le flux volumétrique de la pompe à chaleur (30) du côté du condensateur correspond au double, généralement entre 1,5 et 2,5 fois, du flux volumétrique du côté de l'évaporateur.

15. Système de chauffage hybride conformément à l'une quelconque des revendications 1 à 14, **caractérisé en ce que** le flux volumétrique de la pompe à chaleur (30) du côté du condensateur correspond au double, généralement entre 1,5 et 2,5 fois, du flux volumétrique du côté de l'évaporateur.
